# EUROPÄISCHE PATENTSCHRIFT

(11) **EP 0 850 377 B1**
(45) Veröffentlichungstag und Bekanntmachung des Hinweises auf die Patenterteilung: **08.12.1999**
(21) Anmeldenummer: 96930991.3
(22) Anmeldetag: 31.08.1996
(51) Int. Cl.: F16K 27/04, F16K 3/08

(54) **WASSERVENTILOBERTEIL MIT IN EINEM GEHÄUSE BEFINDLICHEN KERAMISCHEN DICHTSCHEIBEN**
UPPER SECTION OF A WATER VALVE WITH CERAMIC SEALING DISCS IN A HOUSING
PARTIE SUPERIEURE D'UN ROBINET D'EAU COMPORTANT DES DISQUES D'ETANCHEITE CERAMIQUES SITUES DANS LE CORPS DU ROBINET

(30) Priorität: 14.09.1995 AT 152795
(43) Veröffentlichungstag der Anmeldung: 01.07.1998
(73) Patentinhaber: Ideal-Standard GmbH & Co. OHG, 53121 Bonn (DE)
(72) Erfinder: SCHNEIDER, Hermann-Josef, D-54338 Schweich (DE)
(74) Vertreter: Puchberger, Rolf, Dipl. Ing.
(86) Internationale Anmeldenummer: EP9603829
(87) Internationale Veröffentlichungsnummer: WO9710460

(56) Entgegenhaltungen:
- EP-A- 0 065 266
- EP-A- 0 450 582
- EP-A- 0 557 696
- DE-A- 4 139 814
- FR-A- 2 620 508

## Beschreibung

Die Erfindung betrifft ein Wasserventiloberteil mit in einem Gehäuse befindlichen keramischen Dichtscheiben.

Ein oberbegriffsmäßiges Wasserventiloberteil ist bekannt aus EP-A-65266.

Solche Wasserventiloberteile liegen für die Montage einer Wasserarmatur als Einheit vor und werden bei der Montage durch ein an ihrer Außenseite befindliches Gewinde am Montageort befestigt.

Das Gehäuse der bisher bekannten Wasserventiloberteile wird entweder aus Metall, vorzugsweise aus Messing, oder aus Kunststoff gefertigt. Ein Metallgehäuse ist stabil und das eingearbeitete Außengewinde sorgt für einen zuverlässigen, dauerhaften Halt, jedoch ist das Gewicht der Montageeinheit, d.h. des Wasserventiloberteils beträchtlich und der Werkstoff ist teuer. Ein Kunststoffgehäuse hingegen hat den Vorteil, daß die Montageeinheit leicht und billig ist, andererseits hält es den mechanischen Beanspruchungen, denen die Montageeinheit unterworfen ist, nicht oder zumindest nicht auf Dauer stand. So ist z.B. die Ventilspindel im Gehäuse gelagert, und diese Lagerung zeigt wenn sie aus Kunststoff ist sicher nach einiger Zeit Abnützungen. Dasselbe gilt für das an der Außenseite des Gehäuses befindliche Gewinde, das nach einiger Zeit nicht mehr den nötigen Halt gibt. Beim Außengewinde im Kunststoffgehäuse besteht auch die Gefahr, daß das Gewinde bereits vor dem Einschrauben beschädigt wird.

Es ist daher Aufgabe der vorliegenden Erfindung, ein Wasserventiloberteil zu schaffen, das kostengünstig in der Herstellung, leicht im Gewicht, stabil sowie zuverlässig und dauerhaft befestigbar ist.

Diese Aufgabe wird gelöst durch die kennzeichnenden Merkmale des 1 Anspruchs.

Die beiden am stärksten mechanisch beanspruchenden Funktionen des Gehäuses, nämlich die Lagerung der Spindel und der Halt des Wasserventiloberteils durch das Außen- oder Einschraubgewinde, werden aufgrund der erfindungsgemäßen Zusammensetzung des Gehäuses durch die stabile Metallhälfte dauerhaft gewährleistet. Der mechanische weniger beanspruchte, im montierten Zustand untere Gehäuseteil ist aus Kunststoff, wodurch das Gesamtgewicht und der Herstellungspreis der Montageeinheit gegenüber einer Montageeinheit mit einem Gehäuse ganz aus Metall herabgesetzt ist. Dennoch weist das erfindungsgemäße Wasserventiloberteil gleich gute Qualität wie das Wasserventiloberteil mit einem Gehäuse ganz aus Metall auf.

Vorzugsweise ist eine oder sind mehrere der Dichtungen an die Kunststoffhälfte angespritzt. Das Dichtungsmaterial läßt sich mit dem Kunststoff der Kunststoffhälfte des Gehäuses durch Anspritzen einfach und fest verbinden. Um das Dichtungsmaterial auf eine Metallfläche aufspritzen zu können, müßte diese besonders vorbereitet werden, was zeit- und kostenaufwendig und damit unrentabel ist. Das Anspritzen der Dichtung(en) auf eine Kunststoffoberfläche ist problemlos und der komplizierte Montageschritt des Einsetzens der gesondert vorliegenden Dichtungen entfällt.

Jeder angespritzten Dichtung ist vorzugsweise eine Expansionskammer zugeordnet, um ihre Verformung zuzulassen.

Die Kunststoffhälfte ist geeignet wahlweise Keramikscheibensysteme mit einem Öffnungswinkel von 90° oder einem Öffnungswinkel von 180° aufzunehmen. D.h., daß das Ventil durch eine 90°-Drehung oder durch eine 180°-Drehung der Spindel ganz geöffnet werden kann. Kann die Kunststoffhälfte des Gehäuses wahlweise diese beide Systeme aufnehmen, kann die selbe Gehäuseform für beide Systeme verwendet werden und die Kunststoffhälfte kann für beide Systeme mit dem selben Werkzeug hergestellt werden.

Die Kunststoffhälfte ist gegenüber der Metallhälfte im ausgebauten Zustand praktisch nicht beweglich. D.h. während der Lagerhaltung und bei der Handhabung vor der Montage, kann es zu keiner Relativbewegung zwischen der Metallhälfte und der Kunststoffhälfte und damit auch nicht zu einem Lokkern, Lösen oder Abnutzen der Verbindung dieser beiden Hälften kommen.

Die Kunststoffhälfte ist mit der Metallhälfte sowohl über Rastnasen als auch über Arretiernasen verbunden, wodurch die beiden Hälften sowohl richtig zueinander ausgerichtet als auch gegen Verdrehen gesichert sind.

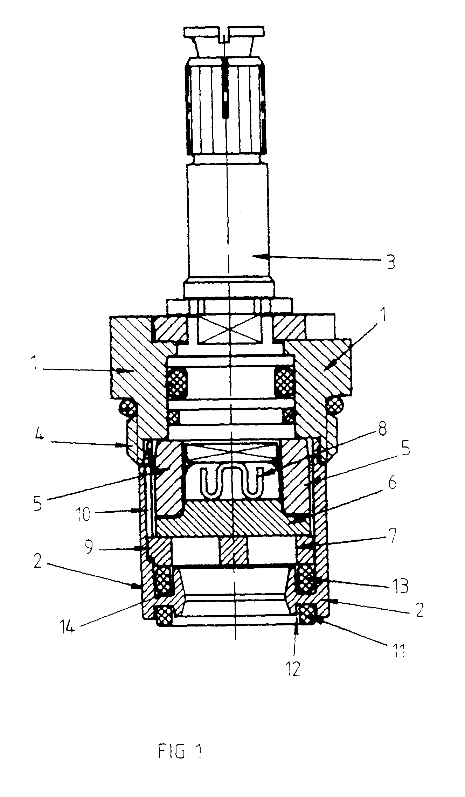

Die Erfindung wird nun anhand der beiliegenden Zeichnung (Fig.1) beschrieben, die einen Längsschnitt durch ein erfindungsgemäßes Wasserventiloberteil zeigt.

Das Gehäuse besteht aus einer Metallhälfte 1, vorzugsweise aus Messing, und einer Kunststoffhälfte 2. Das Gehäuse wird von einer Spindel 3 durchsetzt, der die Metallhälfte 1 als stabiles, dauerhaftes Lager dient. Am unteren Ende weist die Metallhälfte 1 ein gegen Abnutzung und Beschädigung gut beständiges Außen- bzw. Einschraubgewinde 4 zur Befestigung des Wasserventiloberteils am Montageort auf. An der Spindel 3 sind Fortsätze 5 befestigt die als Mitnehmer für die bewegliche Dichtscheibe 6 dienen und in Ausnehmungen in deren Oberfläche ragen.

Die Fortsätze 5 erstrecken sich bereits in der Kunststoffhälfte 2, die neben der oberen, beweglichen Dichtscheibe 6 auch die untere, ortsfeste Dichtscheibe 7 sowie einen Geräuschdämpfer 8 enthält. Die untere Dichtscheibe 7 weist an ihrem äußeren Umfang eine Nase 9 auf, die in eine Nut 10 in der Innenwand der Kunststoffhälfte 2 ragt und damit die untere Dichtscheibe 7 am Verdrehen hindert. Am unteren Ende der Kunststoffhälfte 2 ist eine Eintrittsdichtung 11 mit einer ihr zugeordneten Expansionskammer 12 vorgesehen, um das Gehäuse des Wasserventiloberteils am Wasserzulauf abzudichten. Oberhalb der Eintrittsdichtung 11 ist eine Dichtung 13 zur Abdichtung des Gehäuses gegenüber der unteren Dichtscheibe 7 angeordnet. Auch dieser Dichtung ist eine Expansionskammer 14 zugeordnet. Beide Dichtungen 11, 13 sind an die Kunststoffhälfte 2 angespritzt und können sich bei Verformung in ihre Expansionskammern 12, 14 erstrecken. Die Kunststoffhälfte 2 führt die Fortsätze der Spindel 3 und die obere Dichtscheibe 6 bei ihrer Drehung und sie hält die mit ihrer Nase 9 in die Nut 10 in der Innewand der Kunststoffhälfte 2 eingreifende, untere Dichtscheibe 7. Diese Funktionen der Kunststoffhälfte 2 bedingen aber nur sehr geringe mechanische Beanspruchungen, da die Keramikscheiben 6 und 7 hochpolierte Oberflächen aufweisen, die praktisch keine Reibungskräfte zulassen.

Die Metallhälfte 1 und die Kunststoffhälfte 2 sind sowohl über eine oder mehrere Rastnasen, die die beiden Hälften 1, 2 in Längsrichtung richtig zueinander ausrichten, als auch über eine oder mehrere Arretiernasen, die eine Verdrehung der beiden Hälften 1, 2 gegeneinander verhindern, miteinander verbunden.

Durch eine derartige erfindungsgemäße Materialkombination für ein Gehäuse bei Wasserventiloberteilen, kann Gewicht reduziert und können Kosten gesenkt werden ohne, daß auf die Stabilität und Langlebigkeit, wie sie von Ganzmetallgehäusen bekannt sind, verzichtet werden muß.

## Patentansprüche

1. Wasserventiloberteil mit einem Gehäuse, das aus einer Metallhälfte (1) vorzugsweise aus Messing und einer Kunststoffhälfte (2) besteht, die eine feste Dichtscheibe (7) und eine über eine Spindel (3) drehbare Dichtscheibe (6), einen Mitnehmer (5), eine Eintrittsdichtung (11), eine Dichtung (13) gegenüber einer der keramischen Dichtscheiben (6,7) und Wasseraustrittsöffnungen enthält und gegen Rotation gegenüber der Metallhälfte (1) gesichert ist, wobei die Metallhälfte (1) an ihrem im eingebauten Zustand unteren Rand ihrer äußeren Oberfläche ein Einschraubgewinde (4) aufweist, dadurch gekennzeichnet, daß ausschließlich die Metallhälfte (1) als Lager für die Spindel (3) dient und daß die Kunststoffhälfte (2) mit der Metallhälfte (1) zur Vermeidung von translatorischen Verschiebungen gegeneinander entlang ihrer Längsachsen verrastet ist.

2. Wasserventiloberteil nach Anspruch 1, dadurch gekennzeichnet, daß eine oder mehrere der Dichtungen (11, 13) an die Kunststoffhälfte (2) angespritzt sind.

3. Wasserventiloberteil nach Anspruch 2, dadurch gekennzeichnet, daß jeder angespritzten Dichtung (11, 13) eine Expansionskammer (12, 14) zugeordnet ist.

4. Wasserventiloberteil nach einem der vorhergehenden Ansprüche, dadurch gekennzeichnet, daß die Kunststoffhälfte (2) geeignet ist, wahlweise Keramikscheibensysteme mit einem Öffnungswinkel von 90° oder einem Öffnungswinkel von 180° aufzunehmen.

5. Wasserventiloberteil nach einem der vorhergehenden Ansprüche, dadurch gekennzeichnet, daß die Kunststoffhälfte (2) gegenüber der Metallhälfte (1) im ausgebauten Zustand praktisch nicht beweglich ist.

6. Wasserventiloberteil nach einem der vorhergehenden Ansprüche, dadurch gekennzeichnet, daß die Kunststoffhälfte (2) mit der Metallhälfte (1) sowohl über Rastnasen, die die translatorische Verschiebung der beiden Hälften (1, 2) gegeneinander und entlang ihrer Längsachse verhindern, als auch über Arretiernasen, die die Rotation der beiden Hälften (1, 2) gegeneinander und um ihre Längsachse verhindern, verbunden ist.

## Claims

1. Upper portion of a water valve having a housing, which consists of a metal half (1), preferably made of brass, and a plastics half (2) which contains a fixed sealing washer (7) and a sealing washer (6) that can be rotated by way of a spindle (3), a driver (5), an inlet seal (11), a seal (13) in respect of one of the ceramic sealing washers (6, 7) and water-outlet openings and is secured against rotation in respect of the metal half (1), wherein the metal half (1) has a screw-in thread (4) on the edge of its outer surface that is its lower edge in the installed state,
characterised in that exclusively the metal half (1) is used as a bearing for the spindle (3) and in that the plastics half (2) is latched together with the metal half (1) in order to avoid translatory displacements in relation to each other along their longitudinal axes.

2. Upper portion of a water valve according to claim 1, characterised in that one or a plurality of the seals (11, 13) are injection-moulded onto the plastics half (2).

3. Upper portion of a water valve according to claim 2, characterised in that an expansion chamber (12, 14) is associated with each seal (11, 13) injection-moulded thereon.

4. Upper portion of a water valve according to one of the preceding claims, characterised in that the plastics half (2) is suitable for selectively accommodating ceramic washer systems with an opening angle of 90° or ceramic washer systems with an opening angle of 180°.

5. Upper portion of a water valve according to one of the preceding claims, characterised in that the plastics half (2) is substantially immovable in relation to the metal half (1) in the non-installed state.

6. Upper portion of a water valve according to one of the preceding claims, characterised in that the plastics half (2) is connected to the metal half (1) not only by way of locating lugs, which prevent the translatory displacement of the two halves (1, 2) in relation to each other and along their longitudinal axis, but also by way of arresting lugs which prevent the rotation of the two halves (1, 2) in relation to each other and about their longitudinal axis.

## Revendications

1. Partie supérieure d'un robinet d'eau, comportant un corps, qui est constitué d'une moitié (1) métallique, de préférence en laiton, et d'une moitié (2) en matière plastique, moitié en matière plastique qui contient un disque (7) d'étanchéité fixe et un disque (6) d'étanchéité pouvant tourner par l'intermédiaire d'une broche (3), un entraîneur (5), une garniture (11) d'étanchéité d'entrée, une garniture (13) d'étanchéité en face d'un des disques (6, 7) d'étanchéité en céramique et des orifices de sortie d'eau, et qui est empêchée de tourner par rapport à la moitié (1) métallique, la moitié (1) métallique comportant, au bord inférieur, à l'état monté, de sa surface extérieure, un filetage (4), caractérisée en ce qu'exclusivement la moitié (1) métallique sert de palier à la broche (3) et en ce que la moitié (2) en matière plastique est encliquetée avec la moitié (1) métallique pour empêcher des déplacements en translation de l'une par rapport à l'autre le long de leurs axes longitudinaux.

2. Partie supérieure d'un robinet d'eau, suivant la revendication 1, caractérisée en ce qu'une ou plusieurs des garnitures d'étanchéité (11, 13) viennent de moulage avec la moitié (2) en matière plastique.

3. Partie supérieure d'un robinet d'eau, suivant la revendication 2, caractérisée en ce qu'il est associé à chaque garniture d'étanchéité (11, 13) qui vient de moulage une chambre (12, 14) d'expansion.

4. Partie supérieure d'un robinet d'eau, suivant l'une des revendications précédentes, caractérisée en ce que la moitié (2) en matière plastique est adaptée pour recevoir un système de disques céramiques ayant au choix un angle d'ouverture de 90° ou de 180°.

5. Partie supérieure d'un robinet d'eau, suivant l'une des revendications précédentes, caractérisée en ce que la moitié (2) en matière plastique n'est, pratiquement pas mobile par rapport à la moitié (1) métallique, à l'état sortie.

6. Partie supérieure d'un robinet d'eau, suivant l'une des revendications précédentes, caractérisée en ce que la moitié (2) en matière plastique est reliée à la moitié (1) métallique, non seulement par des ergots d'encliquetage, qui empêchent les déplacements en translation des deux moitiés (1, 2) l'une par rapport à l'autre et le long de leurs axes longitudinaux, mais aussi par des ergots de blocage, qui empêchent la rotation mutuelle des deux moitiés l'une par rapport à l'autre ainsi qu'une rotation par rapport à leur axe longitudinal.
